Europäisches Patentamt

European Patent Office

Office européen des brevets

(19)

(11) EP 1 298 783 A2

(12) EUROPEAN PATENT APPLICATION

(43) Date of publication:
02.04.2003 Bulletin 2003/14

(51) Int Cl.⁷: H02P 6/14

(21) Application number: 02078724.8

(22) Date of filing: 10.09.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 01.10.2001 US 968252

(71) Applicant: Delphi Technologies, Inc.
Troy, MI 48007 (US)

(72) Inventors:
• Skellenger, Dennis B.
  Vassar, MI 48768 (US)
• Mir, Sayeed A.
  Saginaw, MI 48603 (US)

(74) Representative: Denton, Michael John
Delphi Automotive Systems,
Centre Technique Paris,
117, avenue des Nations,
B.P. 60059
95972 Roissy Charles de Gaulle Cédex (FR)

(54) Switching methodology for ground referenced voltage controlled electric machine

(57) Disclosed is a system for dead time switching in a sinusoidally excited PM electric machine (12). The system comprises: a PM electric machine (12); a position sensor (14) configured to measure a position of the electric machine (12) and transmit a position signal (24); and a controller (18), where the controller (18) receives the position signal (24). The controller (18) executes a method comprising: obtaining a duty cycle command (32); generating a first control command signal to an upper switching device (36), (40), (44) and a second control command signal to a lower switching device (38), (42), (46) configured to drive the electric machine (12) in response to the duty cycle command (32); and applying a dead time to the first control command signal to ensure that the upper switching device (36), (40), (44) and the lower switching device (38), (42), (46) are not conducting simultaneously; and wherein the dead time comprises a turn on delay (50) and an advance turn off (54).

Fig.1.

EP 1 298 783 A2

# Fig.2.

**Description**

BACKGROUND

Electric power steering is commonly used in vehicles to improve fuel economy and has started to replace hydraulic power steering in some vehicles. One way this is accomplished is through the reduction or elimination of losses inherent in traditional steering systems. Therefore, electric power steering typically requires power only on demand. Commonly, in such systems an electronic controller is configured to require significantly less power under a small or no steering input condition. This dramatic decrease from conventional steering assist is the basis of the power and fuel savings.

Furthermore, polyphase permanent magnet (PM) brushless motors excited with a sinusoidal field provide lower torque ripple, noise, and vibration when compared with those excited with a trapezoidal field. Theoretically, if a motor controller produces polyphase sinusoidal currents with the same frequency and phase as that of the sinusoidal back electromotive force (EMF), the torque output of the motor will be a constant, and zero torque ripple will be achieved. However, due to practical limitations of motor design and controller implementation, there are always deviations from pure sinusoidal back EMF and current waveforms. Such deviations usually result in parasitic torque ripple components at various frequencies and magnitudes. Various methods of torque control can influence the magnitude and characteristics of this torque ripple.

One method of torque control for a permanent magnet motor with a sinusoidal, or trapezoidal back EMF is accomplished by directly controlling the motor phase currents. This control method is known as current mode control. The phase currents are actively measured from the motor phases and compared to a desired profile. The voltage across the motor phases is controlled to minimize the error between the desired and measured phase current. However, current mode control requires multiple current sensors and A/D channels to digitize the feedback from current sensors, which would be placed on the motor phases for phase current measurements.

Another method of torque control is termed voltage mode control. In voltage mode control, the motor phase voltages are controlled in such a manner as to maintain the motor flux sinusoidal and motor back emf rather than current feedback is employed. Voltage mode control also typically provides for increased precision in control of the motor, while minimizing torque ripple. One application for an electric machine using voltage mode control is the electric power steering system (EPS).

In voltage mode control the amplitude and phase angle of phase voltage vector is calculated based on the motor back emf, position and motor parameters (e.g., resistance, inductance and back emf constant). A sinusoidal instantaneous line voltage based on the calculated phase and amplitude vector of phase voltage is applied across the motor phases. An instantaneous value of voltage is realized across the phases by applying a pulse width modulated (PWM) voltage the average of which, during each PWM cycle, is equal to the desired instantaneous voltage applied at that position of the motor.

There are different methods of profiling the phase voltages in order to achieve a sinusoidal line-to-line voltage and therefore the phase current in a wye-connected motor. A conventional approach is to apply sinusoidal voltages at the phase terminals. In this method the reference for the applied voltage is at half the dc bus voltage ($V_{dc}/2$). Another approach is the phase to ground method, which increases the voltage resolution and reduces switching losses. In this method, the phase voltage is referenced to the power supply ground (instead of $V_{dc}/2$ as in conventional way). This ground reference is achieved by applying a zero voltage at each phase terminal for 120 electrical degrees during one electric cycle.

In EPS drive systems based on a voltage mode controlled sinusoidal PM drive, a full bridge power inverter is employed to apply the pulse width modulated (PWM) voltage across the motor phases. Figures 1 and 2 depict typical motor control circuits. Motor drives, in particular, EPS systems employ a phase to grounding PWM methodology. In this methodology, the phase terminal voltages (e.g., phases A, B, or C) are referenced to ground. This is achieved by applying a zero voltage for 120 electrical degrees across each phase during one electric cycle (grounding a particular phase for a selected 120 electrical degrees). The phase voltage waveform profiles for a phase to grounding PWM methodology are shown in Figure 3.

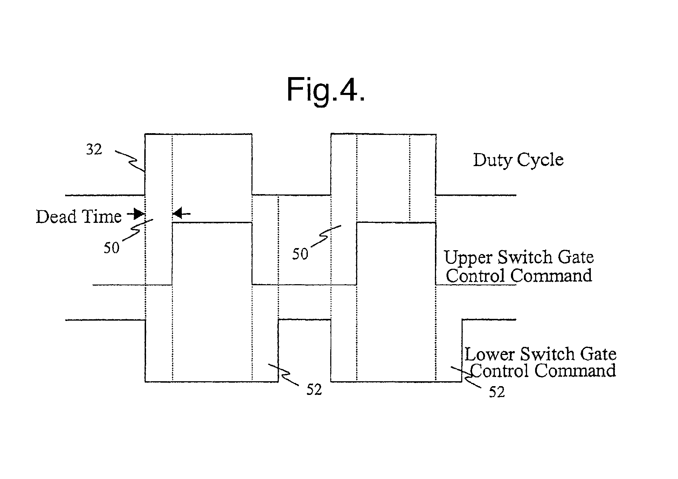

In order to avoid a potential short circuits across the power supply 22 resulting from propagation delays and errors in the timing of the turn on (conduction) and turn off of switching devices 36, 38; 40, 42; and 44, 46 (MOSFET'S in this case), both the switching devices 36, 38; 40, 42; and 44, 46 for a particular motor phase (e.g. phase A, B, or C) are turned off (non-conducting) for a short interval of time at the transition point for the respective switching devices e.g., 36 and 38 for the respective phases. This dead time during which both the switching devices are off causes a non-linearity in the effective voltage applied across the motor phase, and thereby, resulting in a lower motor torque with non-linear input torque command to output motor torque relation. The loss of voltage and subsequently the current makes the output torque of the motor lower than the desired or commanded value. The dead time also causes a significant torque ripple as the effect of the dead time is a function of the instantaneous motor phase current amplitude and polarity. The nature and amplitude of this torque ripple is dependent upon the PWM switching method applied. A conventional method employed to apply a dead time is to delay the turn on of each switch in the full bridge inverter by a small interval of time. The duty cycle and effective gate or command signals of the switching devices in a phase leg e.g., 36 and 38 for the A phase leg, are shown in Figure 4. The effect of the conventional dead time switching method with phase grounding may be severe, a very high torque ripple is commonly observed. Moreover, there is a three per electric revolution ripple introduced in the motor torque in addition to the expected six per revolution ripple inherent with a three phase motor application.

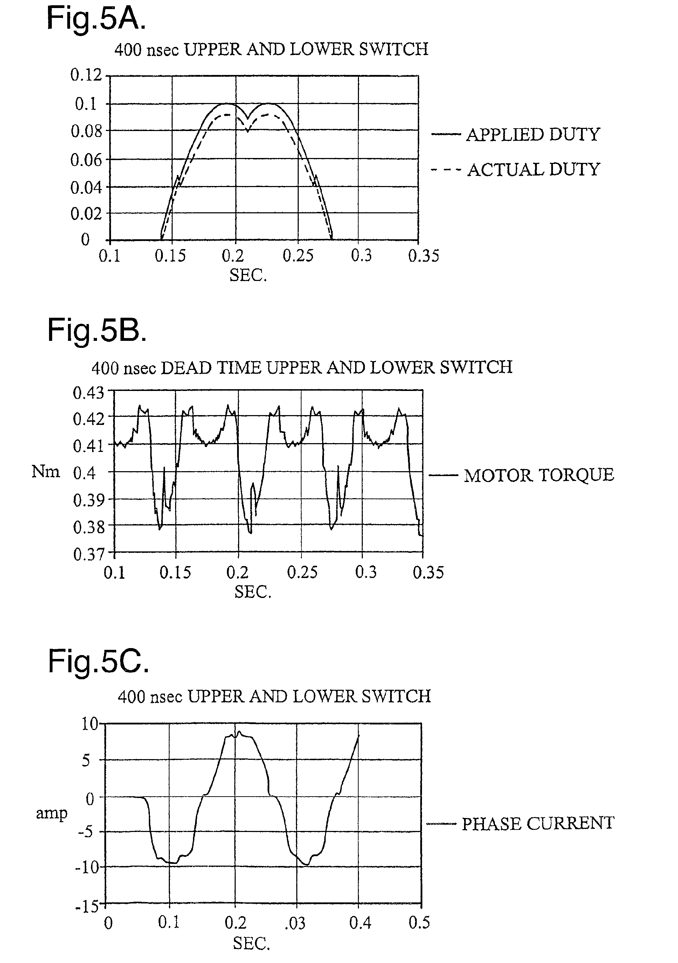

The three per revolution torque ripple is caused by the non-linearity in the phase voltage as the voltage starts to lift from the ground. During the time the selected phase is grounded, there is no loss of voltage as the respective lower switching device 38, 42, or 46 in a selected phase leg is continuously conducting. When the voltage starts to lift from the ground there is a constant voltage loss due to dead time as the upper switching devices 36, 40, and 44 and lower switching devices 38, 42, and 46 respectively in corresponding phase leg begin to switch. The effect of this voltage loss becomes smaller and smaller as the voltage begins to increase. This effect caused a very high three per revolution torque ripple. Figures 5A-5C show the motor phase intended and effective voltage, Motor torque and phase current when using the conventional dead time approach. In such an operating condition an effective torque ripple of 55 milli-Newton-meters is commonly observed with the exemplary embodiment.

The peak-to-peak amplitude of three per revolution torque ripple may be very high even at a small dead time. Such a torque ripple may not be tolerable in certain applications. Therefore it is desirable to reduce the torque ripple and thus enhance the performance of the motor drive system by enhancing the dead time switching methodology.

BRIEF SUMMARY

Disclosed is a system for dead time switching in a sinusoidally excited PM electric machine. The system comprises: a PM electric machine; a position sensor configured to measure a position of the electric machine and transmit a position signal; and a controller, where the controller receives the position signal. The controller executes a method comprising: obtaining a duty cycle command; generating a first control command signal to an upper switching device and a second control command signal to a lower switching device configured to drive the electric machine in response to the duty cycle command; and applying a dead time to the first control command signal to ensure that the upper switching device and the lower switching device are not conducting simultaneously; and wherein the dead time comprises a turn on delay and an advance turn off.

A storage medium encoded with a machine-readable computer program code dead time switching in a sinusoidally excited PM electric machine, the storage medium including instructions for causing controller to implement the disclosed method.

A computer data signal embodied in a carrier wave dead time switching in a sinusoidally excited PM electric machine, the data signal comprising code configured to cause a controller to implement the disclosed method.

BRIEF DESCRIPTION OF THE DRAWINGS

The present invention will now be described, by way of an example, with references to the accompanying drawings, wherein like elements are numbered alike in the several figures in which:

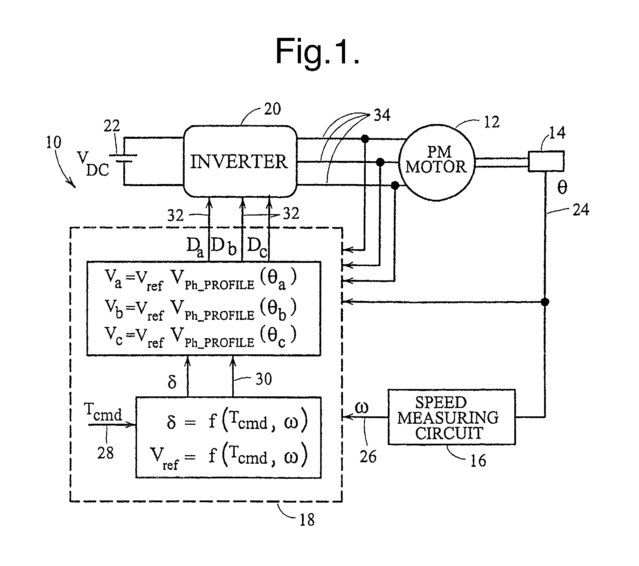

FIGURE 1 is a drawing depicting a voltage mode controlled PM motor drive system;

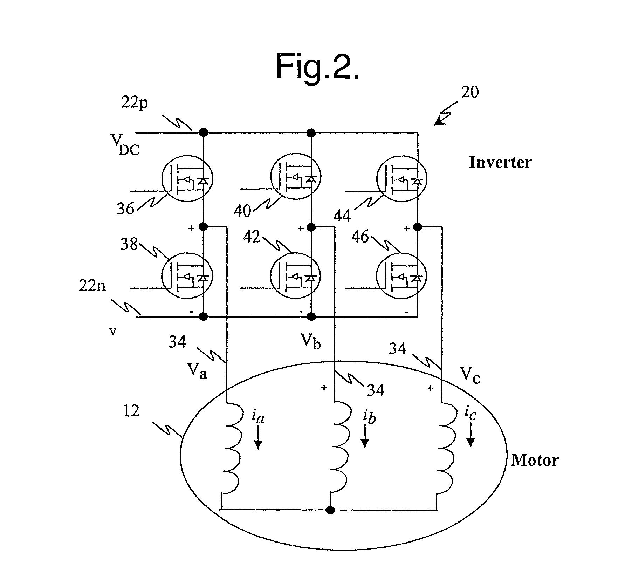

FIGURE 2 depicts a partial view of a PM motor control system of an exemplary embodiment;

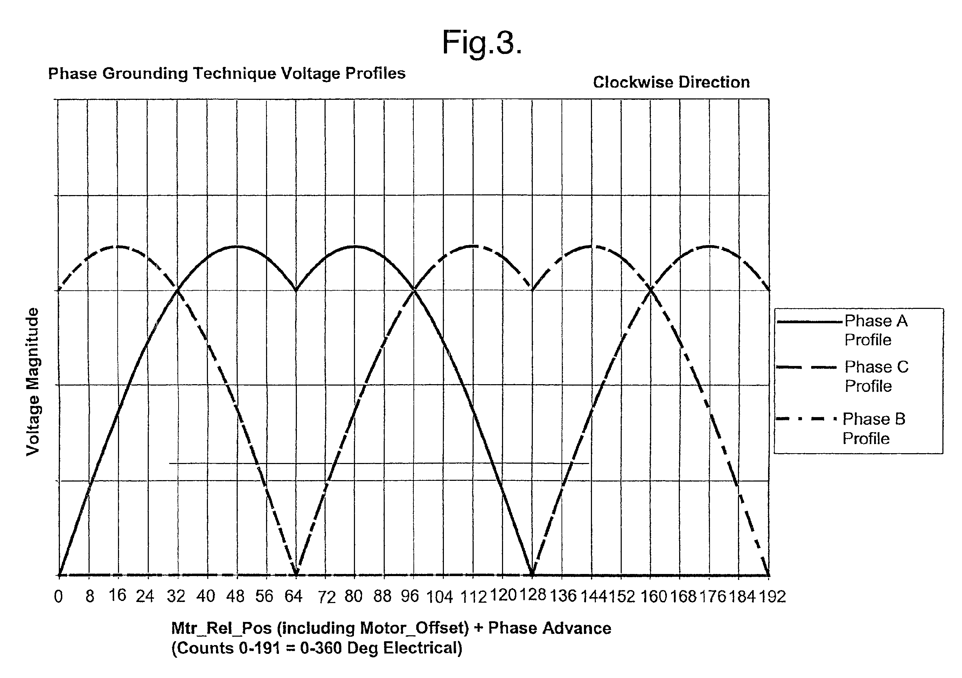

FIGURE 3 depicts the phase voltage profiles for a phase grounding PWM technique;
FIGURE 4 is a diagrammatic view of the timing relationships of the duty cycle and control signals employed in conventional switching;
FIGURE 5A shows a time relationship of a duty cycle signal versus time for conventional switching;
FIGURE 5B shows a time relationship of a motor torque versus time for conventional switching;
FIGURE 5C shows a time relationship of motor drive response versus time for conventional switching;

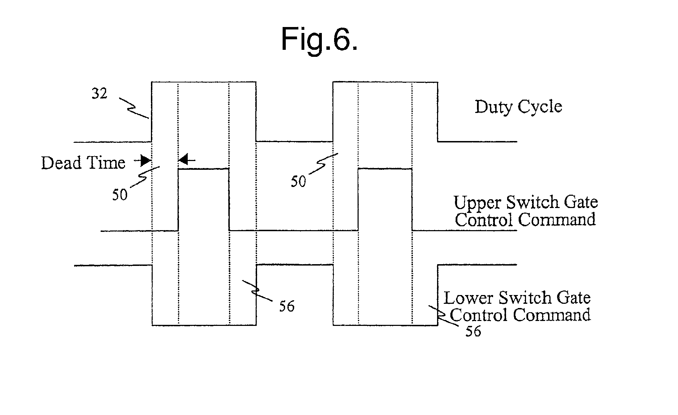

FIGURE 6 is a diagrammatic view of the timing relationships of the duty cycle and control signals employed for an exemplary embodiment;

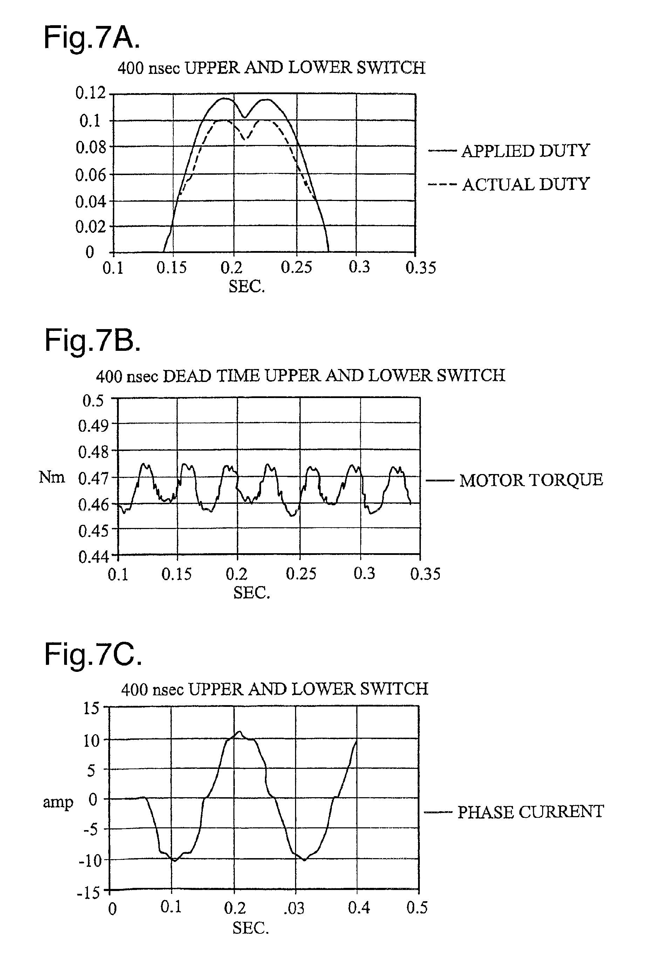

FIGURE 7A shows a time relationship of a duty cycle signal versus time for switching in an exemplary embodiment;
FIGURE 7B shows a time relationship of a motor torque versus time for switching in an exemplary embodiment;
FIGURE 7C shows a time relationship of motor drive response versus time for switching in an exemplary embodiment;

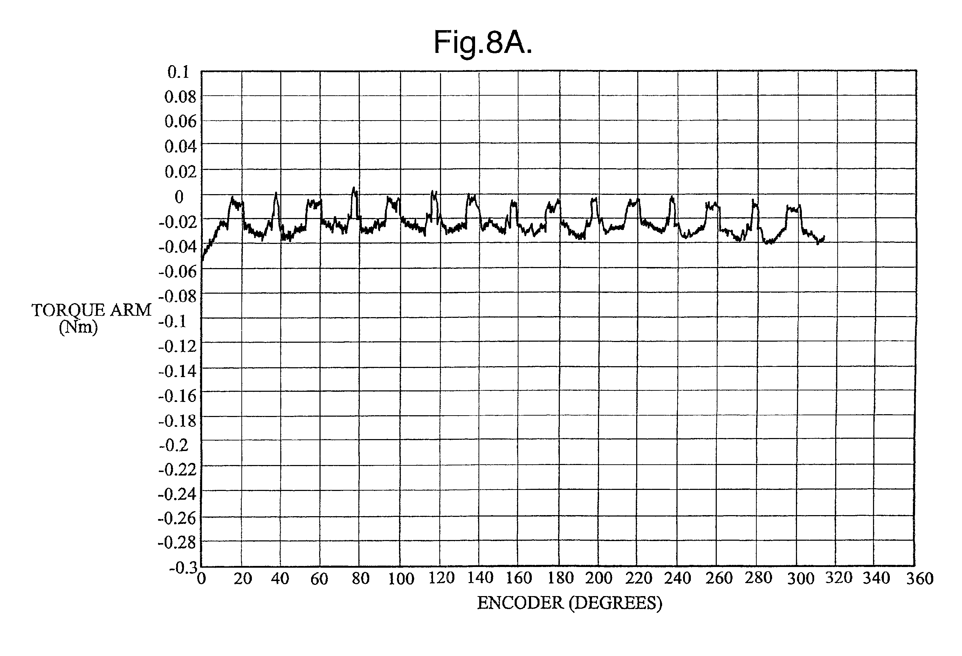

FIGURE 8A shows the torque test results of a motor drive system employing a conventional methodology at low torque levels;

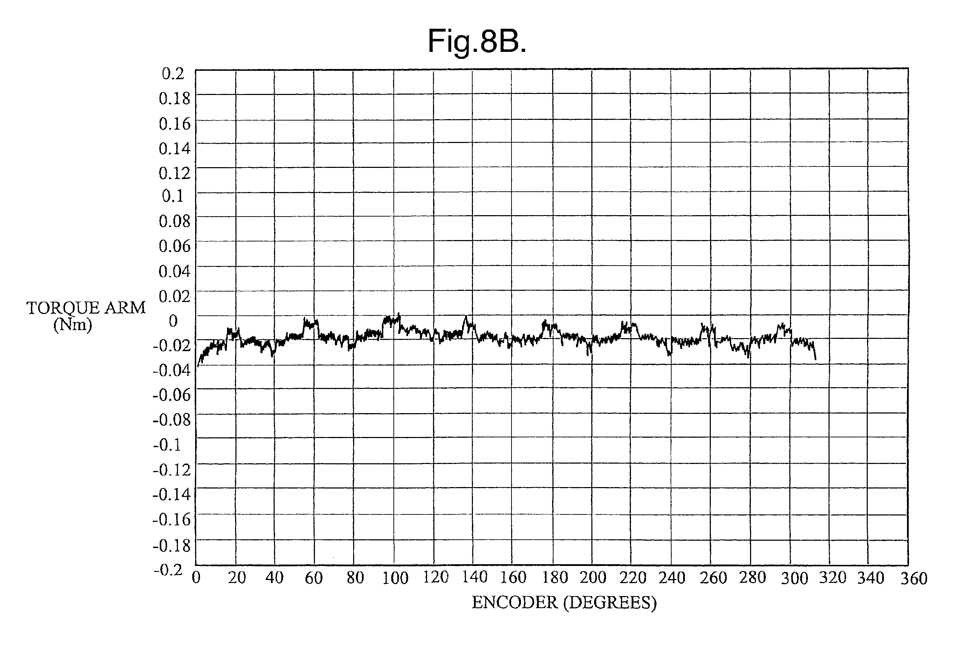

FIGURE 8B shows the torque test results of a motor drive system employing an exemplary embodiment at low torque levels;

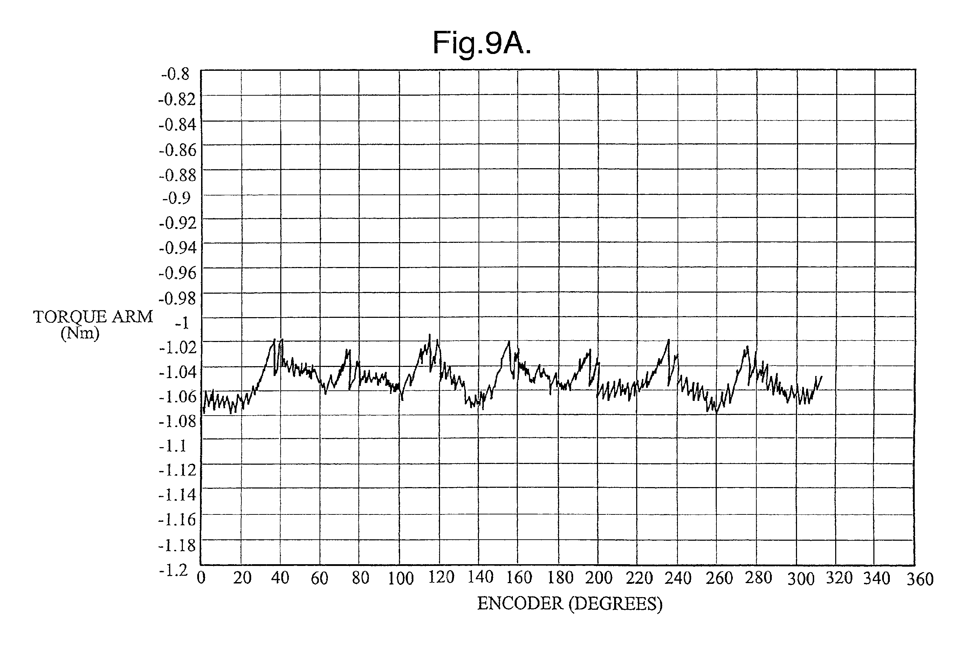

FIGURE 9A shows the torque test results of a motor drive system employing a conventional methodology at high torque levels;

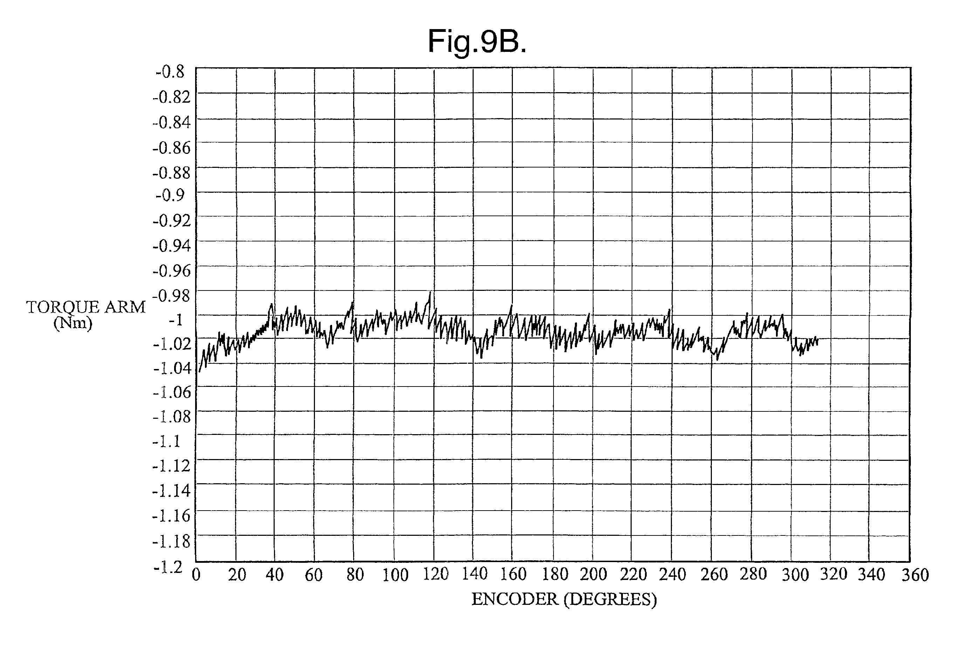

FIGURE 9B shows the torque test results of a motor drive system employing an exemplary embodiment at high torque levels;

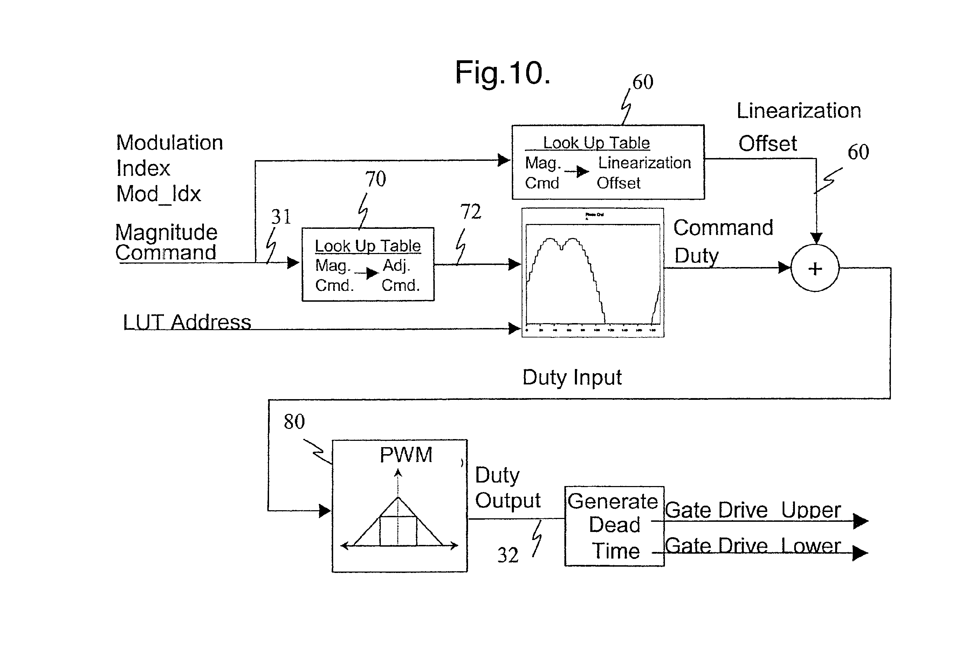

FIGURE 10 depicts a block diagrammatic implementation of an exemplary embodiment of the linearization;

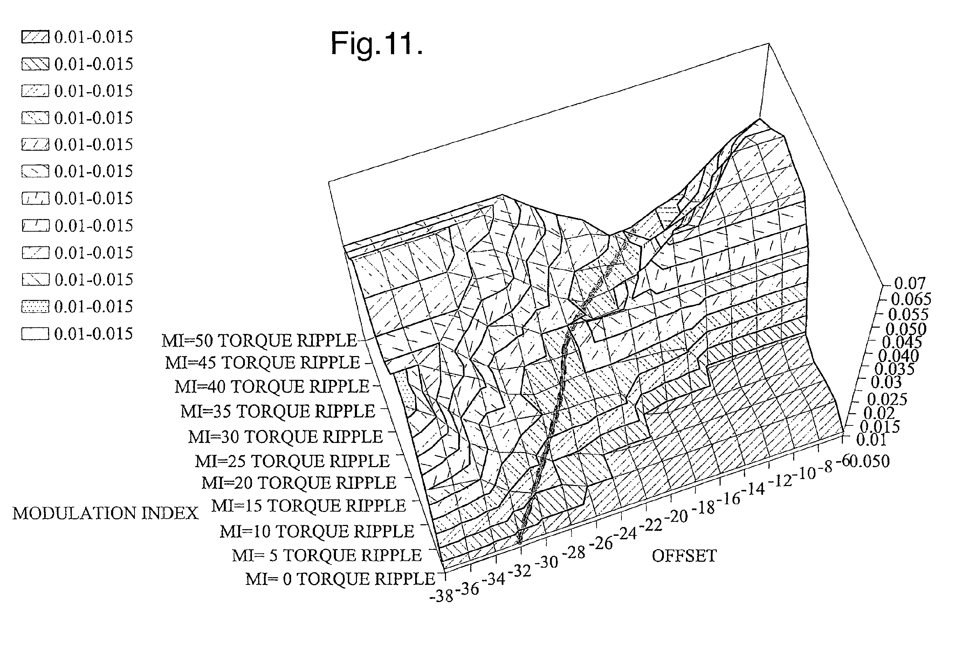

FIGURE 11 is a three dimensional depiction of the combinations of magnitude command, adj. magnitude command and linearization offset and the resultant torque ripple for each; and

FIGURE 13 depicts the adjusted magnitude command and linearization offset values employed in an exemplary embodiment.

## DETAILED DESCRIPTION OF AN EXEMPLARY EMBODIMENT

Disclosed herein in an exemplary embodiment is a system and method for applying dead time to switching in a PWM motor control. In an exemplary embodiment, the dead time is applied to the control of a selected upper switching device for a selected, motor phase. The upper switching device(s) are connected between the positive terminal of DC bus 22p and the motor phase. Delaying the turn on and advancing the turn off of the upper switching devices achieves the dead time control. Because there is no dead time applied to the lower switching devices, the nonlinearity at the point when the phase current lifts off from the ground as evidenced with conventional switching does not appear. Therefore, as there is no loss of voltage before or after the voltage lift, the three per electric revolution torque ripple is considerably reduced.

Referring now to the drawings in detail, Figures 1 and 2 depict a PM motor system 10 as may be employed to implement an exemplary embodiment disclosed herein, where numeral 10 generally indicates a system for controlling the torque of a sinusoidally excited PM electric machine 12 (e.g. a motor, hereinafter referred to as a motor 12). The system includes, but is not limited to, a motor 12, a motor rotor position encoder 14, a speed measuring circuit (or algorithm) 16, a controller 18, power circuit or inverter 20 and power supply 22. Controller 18 is configured and connected to develop the necessary voltage(s) out of inverter 20 such that, when applied to the motor 12, the desired torque is generated. Because these voltages are related to the position and speed of the motor 12, the position and speed of the rotor are determined. A rotor position encoder 14 is connected to the motor 12 to detect the angular position of the rotor denoted θ. The encoder 14 may sense the rotary position based on optical detection, magnetic field variations, or other methodologies. Typical position sensors include potentiometers, resolvers, synchros, encoders, and the like, as well as combinations comprising at least one of the forgoing. The position encoder 14 outputs a position signal 24 indicating the angular position of the rotor.

A motor speed denoted $\omega_m$ may be measured, calculated or a combination thereof. Typically, the motor speed $\omega_m$ is calculated as the change of the motor position θ as measured by a rotor position encoder 14 over a prescribed time interval. For example, motor speed $\omega_m$ may be determined as the derivative of the motor position θ from the equation $\omega_m=\Delta\theta/\Delta t$ where $\Delta t$ is the sampling time and $\Delta\theta$ is the change in position during the sampling interval. In the figure, a speed measuring circuit 16 determines the speed of the rotor and outputs a speed signal 26.

The position signal 24, speed signal 26, and a torque command signal 28 are applied to the controller 18. The torque command signal 28 is representative of the desired motor torque value. The controller 18 processes all input signals to generate values corresponding to each of the signals resulting in a rotor position value, a motor speed value, a temperature value and a torque command value being available for the processing in the algorithms as prescribed herein. Measurement signals, such as the above mentioned are also commonly linearized, compensated, and filtered as desired or necessary to enhance the characteristics or eliminate undesirable characteristics of the acquired signal. For example, the signals may be linearized to improve processing speed, or to address a large dynamic range of the signal. In addition, frequency or time based compensation and filtering may be employed to eliminate noise or avoid undesirable spectral characteristics.

The controller 18 determines the voltage amplitude $V_{ref}$ 30 and its phase advance angle δ, required to develop the desired torque by using the position signal 24, speed signal 26, and torque command signal 28, and other fixed motor parameter values. For a three-phase motor, three sinusoidal reference signals that are synchronized with the motor back EMF $\vec{E}$ are utilized to generate the motor input voltages. The controller 18 transforms the voltage amplitude signal $V_{ref}$ 30 into three phases by determining phase voltage command signals $V_a$, $V_b$, and $V_c$ from the voltage amplitude signal 30 and the position signal 24 according to the following equations:

$$V_a = V_{ref} * V_{ph\_Profile}(\theta_a)$$

$$V_b = V_{ref} * V_{ph\_Profile}(\theta_b)$$

$$V_c = V_{ref} * V_{ph\_Profile}(\theta_c)$$

where $V_{ph\_Profile}(\theta_a)$, $V_{ph\_Profile}(\theta_b)$, $V_{ph\_Profile}(\theta_c)$ are thee profile voltages as shown in Figure 3, and are generated from the sine functions as shown in the following equations:

$$V_{ph\_Profile}(\theta_a) = Sin(\theta_a)\text{-}min[sin(\theta_a),sin(\theta_b),sin(\theta_c)]$$

$$V_{ph\_profile}(\theta_b) = Sin(\theta_b)\text{-}min[sin(\theta_a),sin(\theta_b),sin(\theta_c)]$$

$$V_{ph\_Profile}(\theta_c) = Sin(\theta_c) - min[sin(\theta_a), sin(\theta_b), sin(\theta_c)]$$

These functions are used to generate a phase to grounding phase voltage waveform. These functions may be generated from the sine functions off line and stored in a tabular form such as a look-up table or may be calculated using the above equations. $\theta_a$, $\theta_b$, and $\theta_c$ are three, phase voltage angles shifted by 120 electrical degrees respectively.

In a motor drive system employing phase advancing, a phase advancing angle $\delta$ may also be calculated as a function of the input signal for torque or speed. The phase advancing angle $\delta$ is defined as the angle between the phase voltage vector V and back electromotive force (EMF) vector E as generated by the motor 12 as it rotates. The phase voltage signals $V_a$, $V_b$, and $V_c$ are phase shifted by the phase advancing angle $\delta$. Phase voltage command signals $V_a$, $V_b$, and $V_c$ are used to generate the motor duty cycle commands $D_a$, $D_b$, and $D_c$ 32 using an appropriate pulse width modulation (PWM) technique. Motor duty cycle commands 32 of the controller 18 are processed into on-off control command signals applied to the respective switching devices of the power circuit or inverter 20, which is coupled with a power supply 22 to apply modulated phase voltage signals 34 to the stator windings of the motor in response to the motor voltage command signals.

In order to perform the prescribed functions and desired processing, as well as the computations therefore (e.g., the execution of dead time strategy algorithm(s) prescribed herein, motor control algorithms, and the like), controller 18 may include, but not be limited to, a processor(s), computer(s), memory, storage, register(s), timing, interrupt(s), communication interfaces, and input/output signal interfaces, as well as combinations comprising at least one of the foregoing. For example, controller 18 may include signal input signal filtering to enable accurate sampling and conversion or acquisitions of such signals from communications interfaces. Controller 18 may be implemented as a computer, typically digital, recursively executing software configured to cause the controller to perform various processes. Additional features of controller 18 and certain processes therein are thoroughly discussed at a later point herein.

In an exemplary embodiment, a system and method of applying dead time to the inverter 20 switching is disclosed, which reduces torque ripple and thereby, enhances motor control system performance. Moreover, to achieve a linear command torque to average output torque relationship, the desired duty cycle of the voltage is scheduled as a function the desired modulation index (therefore voltage amplitude) as part of a linearization function disclosed at a later point herein. Controller 18 determines parameters, commands, processing, and the like. Controller 18 receives input signals including the motor phase voltages, a desired torque command 28, and the motor position, to facilitate the processes and as a result generates one or more output signals including control command signals to each of the switching devices 36, 38, 40, 42, 44, and 46. Control of the motor phase voltage signal(s) 34 may be accomplished by manipulation of the duty cycle command 32, $D_a$, $D_b$, and $D_c$ comprising the control command signals as applied to the respective switching devices 36, 38, 40, 42, 44, and 46 for each corresponding motor phase. For example, a first control command is applied to the upper switching device e.g., 36 and a second control command is applied to the lower switching device e.g., 38. The first control command and second control command are responsive to the duty cycle command 32, in this instance $D_a$.

Turning now to Figure 2, a partial view of system 10 is depicted including the elements for practicing the disclosed embodiments. The inverter 20 is connected to a positive bus 22p and a negative bus 22n of the power supply 22. It is noteworthy to appreciate that the controller 18 may, but need not include the inverter 20. Such a configuration of the hardware elements of the system may be selected for implementation purposes only. It will be evident the numerous possible configurations and various allocations of functionality between hardware and software are possible. Such a particular configuration should be considered as illustrative only and not considered limiting to the scope of this disclosure or the claims.

Continuing with Figure 2, inverter 20 is comprised of switching devices 36, 38, 40, 42, 44, 46 arranged in a configuration to control the application of voltage or ground reference to each of the respective motor phases. Such a configuration in an exemplary embodiment comprises three upper switching devices 36, 40, and 44 connected between the positive bus 22p of the power supply 22 and the corresponding lower switching devices 38, 42, and 46 respectively, which are also connected to the reference ground or negative bus 22n of the power supply 22. Moreover, each of the motor phases e.g. phases A, B, and C are connected to the common point between the upper switching devices 36, 40, and 44 respectively and the lower switching devices 38, 42, and 46 respectively. For example, Phase A is connected between upper switching device 36 and lower switching device 38. In addition controller 18 provides duty cycle commands 32 comprising on-off command signals to each of the switching devices 36, 38, 40, 42, 44, and 46 at the appropriate intervals to control the turn on (conduction) and turn off (non-conduction) of each switching device 36, 38, 40, 42, 44, and 46 respectively. Employing this configuration, and controlling the appropriate switching device 36, 38, 40, 42, 44, and 46 controller 18 may regulate the application of voltage to each of the motor phases. It is noteworthy to appreciate that in an exemplary embodiment, the switching devices 36, 38, 40, 42, 44, and 46 are MOSFETs. However, it should be evident that numerous types and styles of devices and structures are possible for the implementation of a switching device including but not limited to mechanized switches, relays, transistors, SCR's, Triacs, GTO's, optical or infrared switching devices, and the like including combinations comprising at least one of the foregoing.

Returning to Figure 2 and as discussed earlier, the system may employ a PWM technique for applying power to the motor 12. As can be seen in Figure 3 the phase voltage profiling functions may have a value of zero for 120 electrical degrees, therefore a zero voltage is applied across the respective motor phase during this interval. The PWM duty cycle of the respective phase during this interval is zero, therefore a selected switching device of the inverter 20 is turned on to connect a respective winding of the motor 12 to the ground or negative bus 22n of the power supply 22. It should be noted that the relationship between the electrical rotational cycles and the mechanical rotational cycles are different by a factor of the number of poles of the motor 12 divided by two. For example, in a six pole motor design as discussed with the exemplary embodiment, the electrical frequency and the mechanical frequency differ by a factor of three. It should also be noted that since the electrical cycle repeats three times per mechanical cycle, signals that are generated as a function of the electrical position (e.g., the reference transition) actually represent three slightly different points on the mechanical cycle. Moreover, it is noteworthy to appreciate that for the motor 12 in an exemplary embodiment, the electrical cycles are substantially identical to one another.

As stated earlier, the inverter 20 may be configured to connect selected phases of the motor 12 to ground under selected conditions. In an exemplary embodiment, the dead time is applied to the control command of a selected upper switching device e.g., 36, 40, and 44 for selected motor phase e.g., A, B, or C. The upper switching device(s) e.g., 36, 40, and 44 are connected between the positive terminal of DC bus 22p and the respective motor phase. Dead time is applied to switching devices 36, 40 and 44 (Figure 2) only. Delaying the turn on and advancing the turn off of the upper switching devices 36, 40, and 44 respectively, achieves the dead time control of an exemplary embodiment.

Referring now to Figures 4 and 6 a comparison of the exemplary embodiment and conventional methods is described. Figure 6 depicts an illustrative timing diagram of a duty cycle command 32 and the control commands or gate signals for the inverter 20 upper and lower switching devices 36, 38; 40, 42; and 44, 46 respectively for each phase using the new dead time methodology. It is noteworthy to appreciate that the dead time applied at the switching transitions of the duty command 32 is now part of the control command(s) for the upper switching devices 36, 40 and 44 only. The dead time implemented as a turn on delay 50 similar to that employed in conventional switching implementations e.g., Figure 4. However, the turn off delay 52 at the transition from the upper switching device e.g., 36 to the lower switching device e.g., 38 of the conventional switching (see Figure 4) is replaced with an advance turn off 54 applied to the control command for the upper switching device e.g., 36. Thereby, eliminating the need to apply any delay or shaping to the control commands for the lower switching devices 38, 42, and 46. Therefore it should be evident, that the control commands for the lower switching devices 38, 42, and 46 may comprise a simple inverse of the duty cycle command(s) 32. It is also evident that because there is no dead time applied to the lower switching devices 38, 42, and 46, the nonlinearity discussed earlier and at the point when the phase voltage lifts off from the ground as evidenced with conventional switching does not appear. Therefore, as there is no loss of voltage before or after the voltage lift, the three per electric revolution torque ripple is considerably reduced. The duration of the dead time selected is also dependent on the propagation and operational delays of the control commands, switching devices 36, 38; 40, 42; and 44, 46, and the electronic circuits employed in the controller 18 and the like, as well as any other elements which may contribute to delay in operation a switching device. In an exemplary embodiment a turn on delay and an advance turn off of 400 nanoseconds is employed. It should be appreciated that for transitions of a switching device (e.g., one or more of 36, 38, 40, 42, 44, and 46), assurances should be made to ensure that the particular switching device (e.g., 36, 38, 40, 42, 44, and 46) in the process of turning off, is completely off (non-conducting) before the next switching device (e.g., another one of 36, 38, 40, 42, 44, and 46) starts to conduct. The selected dead time may be modified with any changes in the electronic circuitry associated with the controller 18 or the switching devices (e.g., 36, 38, 40, 42, 44, and 46) of the inverter 20.

Figures 7A-7C show the phase applied and effective voltage, motor torque and phase current using an exemplary embodiment.

It can be seen that there is no loss of voltage up to the point when the direction of the motor current is negative which at the most operating points is away from the voltage lift point. During the time the direction of the current is negative the current either flows through the lower switches or through the body diode of upper switching devices e.g. 36, 40, and 44 if the upper switching device is off (not conducting). Therefore the dead time in the upper switching device does not affect the voltage across selected motor phase (neglecting the diode drop). Figures 8A and 8B show the torque test results of a motor drive system employing a conventional methodology and the disclosed embodiments respectively at low torque levels (about 0.02 Newton-meters). It can be seen that the torque ripple is reduced by approximately 30% for the methodology of the exemplary embodiment. Figures 9A and B show the torque test results of a motor drive system employing a conventional methodology and the disclosed embodiments respectively at high torque levels (about 1 Newton-meter). The reduction of the torque ripple is more than 30% at high torque levels as well.

A commanded to output torque linearization is achieved in a linearization process by modifying the desired duty cycle as a function of the modulation index. The modulation index denoted Mod_Idx 31 is a variable proportional to the expected or commanded magnitude of the sinusoidal voltages applied to the motor phases. Similarly, it is also proportional to $V_{ref}$ 30 as depicted in Figure 1. A beneficial feature of the exemplary embodiment is that, since there is no loss of duty cycle from the lower switching devices 38, 42, and 46 only an increase in duty cycle 32 is needed to achieve a linear torque relationship. Moreover, it has been determined that, addition of an offset to the calculated duty cycle linearizes the torque command to output relationship but it effects the torque ripple in a certain operating ranges. Therefore, a method is disclosed in an exemplary embodiment that yields good linearity while keeping the torque ripple at its lowest possible value over the whole operating range. The disclosed method uses the magnitude command or modulation index 31 as an input to control the generation of a linearization offset and an adjusted magnitude command. These two variables, in turn, are employed in combination to achieve the desired torque ripple and linearity.

Figure 10 depicts a block diagrammatic implementation of this exemplary embodiment. In an exemplary embodiment, a magnitude command or modulation index 31 as determined in controller 18 is adjusted and scheduled in advance of generating the abovementioned duty cycle commands 32, $D_a$, $D_b$, and $D_c$ comprising the control command signals as applied to the respective switching devices 36, 38, 40, 42, 44, and 46. The magnitude command or modulation index 31 is applied as an input to control the generation of a linearization offset 62 at look up table 60 and an adjusted magnitude command 72 at look up table 70. These two variables, in turn, are employed in combination as an input to the PWM process 80 to formulate duty cycle commands 32, $D_a$, $D_b$, and $D_c$ that achieve the desired motor torque with reduced torque ripple.

For any given magnitude command or modulation index 31, it will be appreciated that there are several combinations of adjusted magnitude command 72 and linearization offset 62 that will yield the same similar average torque output. However, few values of adjusted magnitude command 72 and linearization offset 62 in combination will also result in a low torque ripple. Moreover, it is also desirable to ensure that as the magnitude command or modulation index 31 is increased there are no sudden jumps or transients in adjusted magnitude command 72 or the linearization offset 62. Such transients would result in look up tables that would not allow for part-to-part variability of controller 18. Therefore, to find an advantageous combination of linearization offset and adjusted magnitude command values 62 and 72 respectively, with smooth transitions numerous combinations of the two values are mapped.

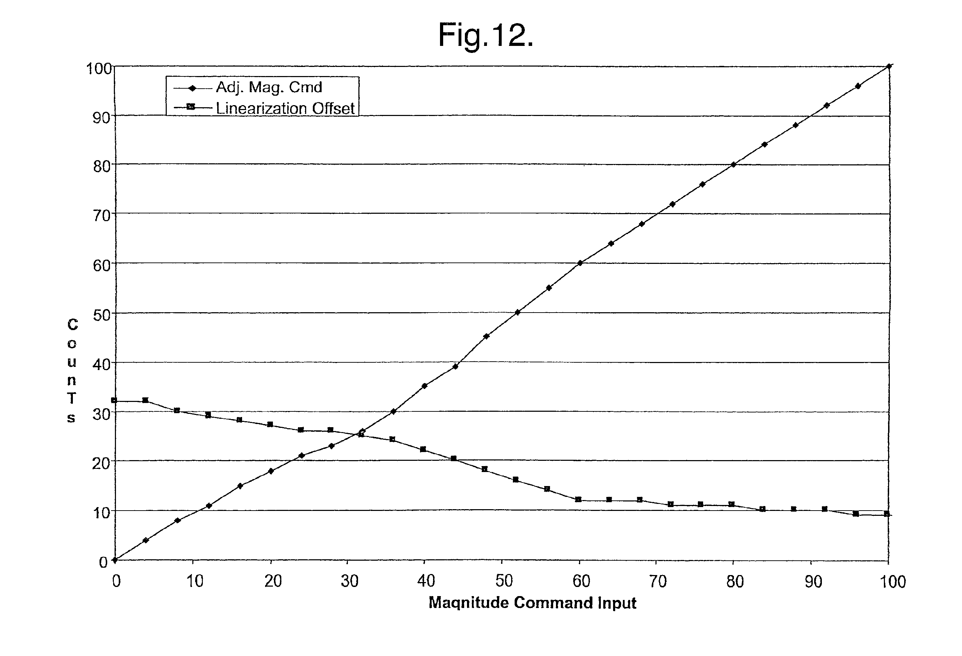

Figure 11 displays a three dimensional depiction of the combinations of adjusted magnitude command 72 or the linearization offset 62 and the resultant torque ripple for each. As will be evident from the mapping in the figure, a reduction or minimization of the torque ripple may be achieved by an appropriate combination of adjusted magnitude command 72 and linearization offset 62. Using averages of torque data, combinations of the linearization offset 62 and adjusted magnitude command 72 were chosen to achieve the same torque level outputs but would constrain operation to the lower torque ripple regime. The dashed (red) line in Figure 11 illustrates the results of this selective combination. The linearization offset and adjusted magnitude command values employed in look up tables 60 and 70 respectively to achieve the final linearization are shown in the graph of Figure 12.

It is also beneficial to recognize that the control of the lower switching devices 38, 42, and 46 is now simplified, as it no longer requires any delays or processing. The control command signals for the lower switching devices are now simplified to be just an inverse of the desired duty cycle. Moreover, in addition to providing an effective methodology for reducing the induced torque ripple the modification to the dead time strategy disclosed herein. In addition, because the exemplary embodiment ensures a reduction in torque ripple over conventional switching methodologies, the harmonics in the current to the motor are reduced and therefrom electromagnetic interference concerns and problems are reduced.

Finally, yet another feature of the disclosed embodiments is that it can be implemented in an existing configuration, which performs conventional switching without additional circuitry or algorithms.

Each of the major systems as described may also include additional functions and capabilities not directly relevant to this disclosure, which need not be described herein. Further, as used herein, signal connections and interfaces may physically take any form capable of transferring a signal or data, including electrical, optical, or radio, whether digital, modulated, or not and the like, as well as combinations thereof and may include and employ various technologies in implementation, such as wired, wireless, fiber optic, and the like, including combinations thereof. It will also be appreciated that look up tables and any filters may take the form of or include multipliers, modulators, schedulers or gains, scaling, and the like, as well as combinations including at least one of the foregoing, which are configured to be dynamic and may also be the function of other parameters.

In the manner described above, the motor dead time switching strategy for a PM electric machine may be simplified and enhanced. Thereby, enhancing motor performance and reducing torque ripple. The disclosed invention can be embodied in the form of computer or controller implemented processes and apparatuses for practicing those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The present invention can also be embodied in the form of computer program code, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A method for ground referenced switching for a sinusoidally excited PM electric machine (12), the method comprising:

    obtaining a duty cycle command (32);
    generating a first control command signal to an upper switching device (36), (40), (44) and a second control command signal to a lower switching device (38), (42), (46) of an inverter (20) configured to drive said electric machine (12) in response to said duty cycle command (32);
    applying a dead time to said first control command signal to ensure that said upper switching device (36), (40), (44) and said lower switching device (38), (42), (46) are not conducting simultaneously; and
    wherein said dead time comprises a turn on delay (50) and an advance turn off (54).

2. The method of Claim 1 wherein said duty cycle command (32) is responsive to at least one of a position signal (24), a torque command signal (28) and a phase advance value.

3. The method of Claim 1 wherein said turn on delay (50) comprises a selected delay of the commanded turn on of said upper switching device (36), (40), (44) relative to said duty cycle command (32).

4. The method of Claim 3 wherein said advance turn off (54) comprises a selected advance of the commanded turn off of said upper switching device (36), (40), (44) relative to said duty cycle command (32)

5. The method of Claim 1 wherein said turn off delay (52) comprises a selected advance of the commanded turn off of said upper switching device (36), (40), (44) relative to said duty cycle command (32).

6. The method of Claim 1 wherein said dead time is configured to reduce torque ripple of said electric machine (12).

7. The method of Claim 1 wherein said dead time is configured to reduce electromagnetic interference of said electric machine (12).

8. The method of Claim 1 wherein said turn on delay (50) is selected to exceed a propagation delay in operation of said upper switching device (36), (40), (44).

9. The method of Claim 8 wherein said turn on delay (50) is 400 nanoseconds.

10. The method of Claim 8 wherein said advance turn off (54) is selected to exceed a propagation delay in operation of said upper switching device (36), (40), (44).

11. The method of Claim 10 wherein said advance turn off (54) delay (52) is 400 nanoseconds.

12. The method of Claim 1 wherein said advance turn off (54) is selected to exceed a propagation delay in operation of said upper switching device (36), (40), (44).

13. The method of Claim 12 wherein said advance turn off (54) is 400 nanoseconds.

14. The method of Claim 1 wherein said duty cycle command (32) is responsive to a linearization process responsive to a magnitude command (31).

15. The method of Claim 14 wherein linearization process includes scheduling said magnitude command (31) to generate a linearization offset (62).

16. The method of Claim 15 wherein said scheduling is a look up table (60) responsive to said magnitude command (31).

17. The method of Claim 15 wherein linearization process includes scheduling said magnitude command (31) to generate an adjusted magnitude command (72).

18. The method of Claim 17 wherein said scheduling is a look up table (70) responsive to said magnitude command (31).

19. The method of Claim 14 wherein linearization process includes scheduling said magnitude command (31) to generate an adjusted magnitude command (72).

20. The method of Claim 19 wherein said scheduling is a look up table (70) responsive to said magnitude command (31).

21. The method of Claim 14 wherein linearization process includes combining a linearization offset (62) and an adjusted magnitude command (72).

22. The method of Claim 14 wherein said linearization process is configured to reduce torque ripple of said electric machine (12).

23. The method of Claim 22 wherein said linearization process is configured to minimize torque ripple of said electric machine (12).

24. The method of Claim 2 wherein said turn on delay (50) comprises a selected delay of the commanded turn on of said upper switching device (36), (40), (44) relative to said duty cycle command (32).

25. The method of Claim 24 wherein said advance turn off (54) comprises a selected advance of the commanded turn off of said upper switching device (36), (40), (44) relative to said duty cycle command (32).

26. The method of Claim 25 wherein said dead time is configured to reduce torque ripple of said electric machine (12).

27. The method of Claim 26 wherein said dead time is configured to reduce electromagnetic interference of said electric machine (12).

28. The method of Claim 27 wherein said advance turn off (54) is selected to exceed a propagation delay in operation of said upper switching device (36), (40), (44).

29. The method of Claim 28 wherein said turn on delay (50) is 400 nanoseconds.

30. The method of Claim 28 wherein said advance turn off (54) is selected to exceed a propagation delay in operation of said upper switching device (36), (40), (44).

31. The method of Claim 30 wherein said advance turn off (54) is 400 nanoseconds.

32. The method of Claim 31 wherein said duty cycle command (32) is responsive to a linearization process responsive to a magnitude command (31).

33. The method of Claim 32 wherein said linearization process is configured to reduce torque ripple of said electric machine (12).

34. The method of Claim 32 wherein linearization process includes scheduling said magnitude command (31) to generate a linearization offset (62).

35. The method of Claim 34 wherein linearization process includes scheduling said magnitude command (31) to generate an adjusted magnitude command (72).

36. The method of Claim 35 wherein linearization process includes combining a linearization offset (62) and an adjusted magnitude command (72).

37. A system for dead time switching in a sinusoidally excited PM electric machine (12), the system comprising:

   a PM electric machine (12);
   a position sensor (14) configured to measure a rotor position of said electric machine (12) and transmit a position signal (24);
   a controller (18), said controller (18) receiving said position signal (24), and
   said controller (18) executing a process comprising obtaining a duty cycle command (32);
   generating a first control command signal to an upper switching device (36), (40), (44) and a second control command signal to a lower switching device (38), (42), (46) configured to drive said electric machine (12) in response to said duty cycle command (32);
   applying a dead time to said first control command signal to ensure that said upper switching device (36), (40), (44) and said lower switching device (38), (42), (46) are not conducting simultaneously; and
   wherein said dead time comprises a turn on delay (50) and an advance turn off (54).

**38.** The system of Claim 37 wherein said duty cycle command (32) is responsive to at least one of a position signal (24), a torque command signal (28) and a phase advance value.

**39.** The system of Claim 37 wherein said turn on delay (50) comprises a selected delay of the commanded turn on of said upper switching device (36), (40), (44) relative to said duty cycle command (32).

**40.** The system of Claim 39 wherein said advance turn off (54) comprises a selected advance of the commanded turn off of said upper switching device (36), (40), (44) relative to said duty cycle command (32).

**41.** The system of Claim 37 wherein said turn off delay (52) comprises a selected advance of the commanded turn off of said upper switching device (36), (40), (44) relative to said duty cycle command (32).

**42.** The system of Claim 37 wherein said dead time is configured to reduce torque ripple of said electric machine (12).

**43.** The system of Claim 37 wherein said dead time is configured to reduce electromagnetic interference of said electric machine (12).

**44.** The system of Claim 37 wherein said turn on delay (50) is selected to exceed a propagation delay in operation of said upper switching device (36), (40), (44).

**45.** The system of Claim 44 wherein said turn on delay (50) is 400 nanoseconds.

**46.** The system of Claim 44 wherein said advance turn off (54) is selected to exceed a propagation delay in operation of said upper switching device (36), (40), (44).

**47.** The system of Claim 46 wherein said advance turn off (54) is 400 nanoseconds.

**48.** The system of Claim 37 wherein said advance turn off (54) is selected to exceed a propagation delay in operation of said upper switching device (36), (40), (44).

**49.** The system of Claim 48 wherein said advance turn off (54) is 400 nanoseconds.

**50.** The system of Claim 37 wherein said controller (18) includes an inverter (20) comprised of said upper switching device (36), (40), (44) and said lower switching device (38), (42), (46).

**51.** The system of Claim 37 wherein said duty cycle command (32) is responsive to a linearization process responsive to a magnitude command (31).

**52.** The system of Claim 50 wherein linearization process includes scheduling said magnitude command (31) to generate a linearization offset (62).

**53.** The system of Claim 52 wherein said scheduling is a look up table (60) responsive to said magnitude command (31).

**54.** The system of Claim 52 wherein linearization process includes scheduling said magnitude command (31) to generate an adjusted magnitude command (72).

**55.** The system of Claim 54 wherein said scheduling is a look up table (70) responsive to said magnitude command (31).

**56.** The system of Claim 51 wherein linearization process includes scheduling said magnitude command (31) to generate an adjusted magnitude command (72).

**57.** The system of Claim 56 wherein said scheduling is a look up table (70) responsive to said magnitude command (31).

**58.** The system of Claim 51 wherein linearization process includes combining a linearization offset (62) and an adjusted magnitude command (72).

**59.** The system of Claim 51 wherein said linearization process is configured to reduce torque ripple of said electric machine (12).

**60.** The system of Claim 59 wherein said linearization process is configured to minimize torque ripple of said electric machine (12).

**61.** The system of Claim 38 wherein said turn on delay (50) comprises a selected delay of the commanded turn on of said upper switching device (36), (40), (44) relative to said duty cycle command (32).

**62.** The system of Claim 61 wherein said advance turn off (54) comprises a selected advance of the commanded turn off of said upper switching device (36), (40), (44) relative to said duty cycle command (32).

**63.** The system of Claim 62 wherein said dead time is configured to reduce torque ripple of said electric machine (12).

**64.** The system of Claim 63 wherein said dead time is configured to reduce electromagnetic interference of said electric machine (12).

**65.** The system of Claim 64 wherein said advance turn off (54) is selected to exceed a propagation delay in operation of said upper switching device (36), (40), (44).

**66.** The system of Claim 65 wherein said turn on delay (50) is 400 nanoseconds.

**67.** The system of Claim 65 wherein said advance turn off (54) is selected to exceed a propagation delay in operation of said upper switching device (36), (40), (44).

**68.** The system of Claim 67 wherein said advance turn off (54) is 400 nanoseconds.

**69.** The system of Claim 68 wherein said duty cycle command (32) is responsive to a linearization process responsive to a magnitude command (31).

**70.** The system of Claim 69 wherein said linearization process is configured to reduce torque ripple of said electric machine (12).

**71.** The system of Claim 69 wherein linearization process includes scheduling said magnitude command (31) to generate a linearization offset (62)

**72.** The system of Claim 71 wherein linearization process includes scheduling said magnitude command (31) to generate an adjusted magnitude command (72).

**73.** The system of Claim 72 wherein linearization process includes combining a linearization offset (62) and an adjusted magnitude command (72).

**74.** A method for ground referenced switching for reduced torque ripple in PM electric machine (12) of an electric power steering system, the method comprising:

obtaining a duty cycle command (32);
generating a first control command signal to an upper switching device (36), (40), (44) and a second control command signal to a lower switching device (38), (42), (46) of an inverter (20) configured to drive said electric machine (12) in response to said duty cycle command (32);
applying a dead time to said first control command signal to ensure that said upper switching device (36), (40), (44) and said lower switching device (38), (42), (46) are not conducting simultaneously; and
wherein said dead time comprises a turn on delay (50) and an advance turn off (54).

**75.** A storage medium encoded with a machine-readable computer program code for ground referenced switching for a sinusoidally excited PM electric machine (12), said storage medium including instructions for causing controller (18) to implement a method comprising:

obtaining a duty cycle command (32);
generating a first control command signal to an upper switching device (36), (40), (44) and a second control command signal to a lower switching device (38), (42), (46) of an inverter (20) configured to drive said electric machine (12) in response to said duty cycle command (32);
applying a dead time to said first control command signal to ensure that said upper switching device (36), (40), (44) and said lower switching device (38), (42), (46) are not conducting simultaneously; and
wherein said dead time comprises a turn on delay (50) and an advance turn off (54).

**76.** A computer data signal embodied in a carrier wave for ground referenced switching for a sinusoidally excited PM electric machine (12), said data signal comprising code configured to cause a controller (18) to implement a method comprising:

obtaining a duty cycle command (32);
generating a first control command signal to an upper switching device (36), (40), (44) and a second control command signal to a lower switching device (38), (42), (46) of an inverter (20) configured to drive said electric machine (12) in response to said duty cycle command (32);
applying a dead time to said first control command signal to ensure that sat upper switching device (36), (40), (44) and said lower switching device (38), (42), (46) are not conducting simultaneously; and
wherein said dead time comprises a turn on delay (50) and an advance turn off (54).

# Fig.1.

$$V_a = V_{ref} \, V_{Ph\_PROFILE}(\theta_a)$$
$$V_b = V_{ref} \, V_{Ph\_PROFILE}(\theta_b)$$
$$V_c = V_{ref} \, V_{Ph\_PROFILE}(\theta_c)$$

$$\delta = f(T_{cmd}, \omega)$$
$$V_{ref} = f(T_{cmd}, \omega)$$

INVERTER

PM MOTOR

SPEED MEASURING CIRCUIT

# Fig.2.

# Fig.3.

**Phase Grounding Technique Voltage Profiles**

**Clockwise Direction**

Voltage Magnitude

0  8  16  24  32  40  48  56  64  72  80  88  96  104  112 120 128 136 144 152 160 168 176 184 192

**Mtr_Rel_Pos (including Motor_Offset) + Phase Advance**
**(Counts 0-191 = 0-360 Deg Electrical)**

Phase A Profile
Phase C Profile
Phase B Profile

EP 1 298 783 A2

# Fig.4.

Duty Cycle

Dead Time →

Upper Switch Gate
Control Command

Lower Switch Gate
Control Command

## Fig.5A.

400 nsec UPPER AND LOWER SWITCH

—— APPLIED DUTY

- - - ACTUAL DUTY

## Fig.5B.

400 nsec DEAD TIME UPPER AND LOWER SWITCH

—— MOTOR TORQUE

## Fig.5C.

400 nsec UPPER AND LOWER SWITCH

—— PHASE CURRENT

# Fig.6.

32

Duty Cycle

Dead Time

50

50

Upper Switch Gate
Control Command

56

Lower Switch Gate
Control Command
56

EP 1 298 783 A2

## Fig.7A.

400 nsec UPPER AND LOWER SWITCH

—— APPLIED DUTY

--- ACTUAL DUTY

## Fig.7B.

400 nsec DEAD TIME UPPER AND LOWER SWITCH

—— MOTOR TORQUE

## Fig.7C.

400 nsec UPPER AND LOWER SWITCH

—— PHASE CURRENT

19

Fig.8A.

TORQUE ARM (Nm) vs ENCODER (DEGREES)

EP 1 298 783 A2

# Fig.8B.

TORQUE ARM (Nm)

ENCODER (DEGREES)

EP 1 298 783 A2

# Fig.9A.

TORQUE ARM (Nm) vs ENCODER (DEGREES)

EP 1 298 783 A2

# Fig.9B.

# Fig.10.

Modulation Index Mod_Idx

Magnitude Command

*31*

*70*

Look Up Table
Mag. Cmd. → Adj. Cmd.

*72*

*60*

Look Up Table
Mag. Cmd. → Linearization Offset

Linearization Offset

*60*

Command Duty

LUT Address

Duty Input

*80*

PWM

Duty Output

*32*

Generate Dead Time

Gate Drive Upper

Gate Drive Lower

Fig.11.

MI=50 TORQUE RIPPLE
MI=45 TORQUE RIPPLE
MI=40 TORQUE RIPPLE
MI=35 TORQUE RIPPLE
MI=30 TORQUE RIPPLE
MI=25 TORQUE RIPPLE
MI=20 TORQUE RIPPLE
MI=15 TORQUE RIPPLE
MI=10 TORQUE RIPPLE
MI= 5 TORQUE RIPPLE
MI= 0 TORQUE RIPPLE

MODULATION INDEX

OFFSET

0.01-0.015
0.01-0.015
0.01-0.015
0.01-0.015
0.01-0.015
0.01-0.015
0.01-0.015
0.01-0.015
0.01-0.015
0.01-0.015
0.01-0.015
0.01-0.015

Fig.12.